# Europäisches Patentamt

## European Patent Office

## Office européen des brevets

(11) Publication number: **0 225 412**
**B1**

# EUROPEAN PATENT SPECIFICATION

(45) Date of publication of patent specification: **04.07.90**

(51) Int. Cl.⁵: **C 01 B 21/087, C 01 B 21/068**

(21) Application number: **85308944.9**

(22) Date of filing: **09.12.85**

(30) A request for correction has been filed pursuant to Rule 88 EPC. A decision on the request will be taken during the proceedings before the Examining Division.

(54) Production of silicon imides and of silicon nitride thereof.

(43) Date of publication of application:
16.06.87 Bulletin 87/25

(45) Publication of the grant of the patent:
04.07.90 Bulletin 90/27

(84) Designated Contracting States:
AT BE CH DE FR GB IT LI LU NL SE

(56) References cited:
GB-A-2 020 264
GB-A-2 040 902
US-A-3 959 446

JOURNAL OF THE CHEMICAL SOCIETY, Section A, 1966, pages 1508-1514, Letchworth, GB; H.J.CAMPBELL-FERGUSON et al.: "Adducts formed between some halogenosilanes and the organic bases Pyridine, Trimethylamine, and Tetramethylethylenediamine. Part I. Stoicheiometry"

The file contains technical information submitted after the application was filed and not included in this specification

(73) Proprietor: **TOA NENRYO KOGYO KABUSHIKI KAISHA**
**1-1 Hitotsubashi, 1-Chome Chiyoda-Ku Tokyo 100 (JP)**

(72) Inventor: **Isoda, Takeshi**
**11-5, Tohoku 1-chome**
**Niiza-shi Saitama-ken (JP)**
Inventor: **Arai, Mikiro**
**1902-5, Oaza-Kamekubo Ohi-machi Iruma-gun Saitama-ken (JP)**

(74) Representative: **Diamond, Bryan Clive et al**
**Gee & Co., Chancery House, Chancery Lane London WC2A 1QU (GB)**

(56) References cited:
CHEMICAL ABSTRACTS, vol. 104, no. 6, 10th February 1986, page 141, no. 36340r, Columbus, Ohio, US; & JP - A - 60 145 903 (TOA NENRYO KOGYO K.K.) 01-08-1985

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention relates to a method of producing a silicon-imide which is useful as a precursor of silicon nitride.

Sintered silcon nitride is a most important material for use as a heat-resistant structural material for gas turbine and diesel engines, and as a high performance material (which is useful for saving energy or for saving resources) for cutting tools, since it is superior in strength and shock-resistance at high temperature, and also in corrosion-resistance.

The following methods are known for production of silicon nitride:

1. Direct nitridation of silicon by heating a silicon at 1300°C in nitrogen or ammonia; but the reaction time is long, the heating process is complicated, and the main product is α-type silicon nitride which is rough and contains many impurities.

2. Silicon is produced by heating silica or material containing silica with carbon in an atmosphere of nitrogen or by a reduction reaction with urea, and the silicon is reacted with ammonia; but it is difficult to purify the raw materials, and in addition, the reaction time is long and the produced material has a binary system of α-type and β-type silicon nitride.

3. Silicon tetra-chloride reacts with ammonia in the gas phase directly at high temperature; but the produced silicon nitride is generally amorphous, so a process of crystallization to obtain α-type silicon nitride is necessary but also it is complicated to deal with chlorine which is by-produced at high temperature reaction.

4. A silicon-imide or silicon-amide is obtained by ammonolysis of silicon tetra-chloride and then is heated to decomposition in a non-oxidative atmosphere to produce silicon nitride. Although there is an advantage that α-type silicone nitride of high purity can be produced in a good yield, the tube of the reaction apparatus is apt to be choked up when the silicon-imide or silicon-amide is formed so the purity thereof is low; in addition, it is difficult to control the rapid exothermic reaction.

5. An organo-polysilazane is pyrolyzed and the resultant polysilazane is heated at 800—2000°C to produce sintered silicon nitride (H. Saito, *Seni Gakkai Shi*, Vol 38, No. 1, pp 65—72 (1982)); but silicon carbide and free carbon are also produced.

It is known that halosilanes, e.g. $SiHF_3$, $SiH_2Cl_2$, $SiH_2Br$ and $SiH_3I$ can be reacted with bases, e.g. excess pyridine or trimethylamine, to form 1:1, 1:2 or 1:4 adducts (H. J. Campbell-Ferguson et. al., *J. Chem. Soc.* (A), 1966, pp. 1508—1514). Reaction thereof with ammonia is not disclosed.

JP—A—60145903 also discloses that halosilane, e.g. the dihalosilane $SiH_2Cl_2$, can be reacted with pyridine or picoline at 0°C to from an adduct, which is reacted with ammonia (diluted with nitrogen) to from an inorganic polysilazane of formula $-(SiH_2-NH)-_n$ which can be extruded to form filaments.

We have found that the efficiency of the latter reaction with ammonia is greatest, and the yield is highest, when the halosilane starting material is trihalo or tetrahalo, e.g. tetrachloro, to produce a silicon imide of formula $SiH(NH)_{1.5}$ or $Si(NH)_2$, and the base is used with a solvent.

We have found that by preparing an adduct which is easily formed from the reaction of a silicon halide (which had been purified easily) with a base, then carrying out ammonolysis quantitatively on said adduct, silicon nitride powder of high purity can be obtained, since not only no catalysts such as Fe and Ca are necessary and no residues such as the base remain, but also it is very easy to remove ammonium chloride.

The present invention thus comprises a method of producing an imide of silicon by (a) reacting a halosilane and an excess of an organic base to form a halosilane adduct and (b) reacting the adduct with ammonia, which may be diluted with nitrogen, characterized in that said halosilane is a trihalosilane or tetrahalosilane and that the reaction (a) is carried out in a solvent.

The silicon halide used in reaction (a) is of the formula $SiX_4$ where X=F, Cl, Br or I and mixtures thereof; silicon tetrachloride is preferably used.

The base used can be selected from bases which are able to from adducts with a silicon halide; bases which do not form an adduct other than with silicon halide are preferable. Examples of these bases are Lewis bases, tertiary amines (e.g. a trialkyl amine such as trimethylamine or triethyl amine, pyridine, picoline and derivatives thereof, e.g. a trialkyl derivative), secondary amines which have a steric hindrance group, phosphine, stibine, arsine and derivatives thereof (e.g., a trialkyl derivative such as trimethyl-phosphine, dimethylethyl-phosphine, methyl-diethyl-phosphine, triethyl-phosphine, trimethyl-arsine and trimethyl-stibine). Bases having a low boiling point and smaller basicity than ammonia (e.g., pyridine, picoline, trimethyl-phosphine, dimethylethyl-phosphine, methyl-diethylphosphine or triethyl-phosphine) are preferable, but pyridine and picoline are the most preferable since they are not only inexpensive but also easy to use.

The quantity of the base need not be large but it should be larger than the stoichiometric amount of silicon halide.

Many kinds of solvents can be used for the reaction (a). Solvents of low density (e.g., hexane, benzene, pyridine, methane chlorides, ether or aceto-nitrile) are preferable; pyridine and methane chlorides are most preferable.

The adduct of the silicon halide is thus formed as a reaction intermediate, which may not need to be separated before being reacted with the ammonia.

The silicon-imide is synthesized by the reaction (b) of said adduct with ammonia, e.g. as ammonia gas, preferably in an atmosphere of an inert gas, preferably nitrogen or argon. The quantity of ammonia need not be high but it should be a larger amount than the stoichiometric amount of silicon.

The reaction temperature (b) is from −78°C to 100°C, preferably from −40°C to 80°C. The reaction time and reaction pressure can be selected over a wide range since the reaction rate is very high. If the reaction temperature is lower than −78°C, the reaction rate becomes small and if the reaction temperature is higher than 100°C the produced silicon-imide is decomposed again.

In an optional further step, by carrying out a heat treatment in the presence of nitrogen after separating ammonium halide from the silicon-imide produced by a suitable method (e.g., liquid ammonia washing or sublimation), the silicon-imide obtained can be converted into silicon nitride containing a high proportion e.g. above 70% of α-type crystal form and of high purity. The phrase "in the presence of nitrogen" herein means an atmosphere of ammonia, nitrogen, a mixed gas of nitrogen and an inert gas such as a mixture of nitrogen and hydrogen, nitrogen and ammonia, nitrogen and argon, or an atmosphere of gases produced by the decomposition of a compound containing nitrogen (e.g., ammonia); nitrogen is always necessary. The ratio of the mixed gases is not restricted, but nitrogen-rich mixed gas is preferable.

Generally, it is preferable that silicon nitride used as raw powder for sintered silicon nitride has an α-type crystal form and has high purity, since α-phase is converted to β-phase during the sintering, which improves the sintering characteristics and the development of a textile-like structure, resulting in sintered silicon nitride having high strength.

To make silicon nitride powder more than 70% of which is of the α-type crystal form and has excellent sintering characteristics in a high yield from the silicon-imide obtained by the present invention, the treating temperature range should be from 1000°C to 1400°C. When the treating temperature is low (e.g., lower than 500°C), the obtained silicon nitride contains chlorine or hydrogen. At a treatment temperature higher than 1900°C, the produced silicon nitride may be decomposed; at 700°C to 1000°C, the main product is a mixture of amorphous silicon nitride and silicon, and at 1400°C to 1900°C, the main product is β-type silicon nitride.

The treating time can be roughly determined by observing the gas which is formed as a byproduct when the silicon imide is heated. Generally, the time is rather shorter at higher temperature and rather longer at lower temperature, but preferably it is from about 8 to 20 hours and a time from about 10 to 16 hours is best.

The oven for this treatment is preferably made of a material which is but little oxidized, such as silicon nitride, silicon carbide, carbon, tantalum or molybdenum.

The above mentioned conditions make it possible to obtain pure silicone nitride having more than 70% of α-type crystal form and containing more than 39% of nitrogen and less than 0.001% of chlorine. However, there may be obtained if necessary silicon nitride containing elements such as Mg, Y, Al, Fe or B which are known as elements able to contribute to sintering.

GB—A—2020264 discloses reaction of a trichlorosilane or silicon tetrachloride in an organic solvent with liquid ammonia to form a silicon-amide or -imide, which is calcined at 600—100°C to form silicon nitride at a high yield and also consisting of 90% α-$Si_3N_4$ and a N content of 39.2 or 39.9% (see Exx. 1 and 6).

The present invention is very useful to produce silicon-imide as a precursor of silicon nitride, since these products can be produced through the reaction of said adduct and the ammonia adduct produced is very stable in the reaction solvent. Thus by the present invention all defects such as loss of silicon halide and choking up of the apparatus can be avoided. For these reasons not only can the reaction temperature in the method of the present invention be raised more than under ordinary conditions but also the concentration of silicon halide in the reaction mixture can be increased without accompanying dangers such as poisoning and firing. Therefore, by the present invention a silicon-imide can be produced in good efficiency by using simple apparatus.

In the accompanying drawings:—

Fig. 1 shows the infrared absorption spectrum of a silicon tetrachloride-pyridine adduct obtained in Preparation Example 1.

Fig. 2 shows the DTA curve (Differential thermal analysis) and the TG curve (Thermogravimetric analysis) of the silicon tetra-chloride pyridine adduct obtained in Preparation Example 1;

Fig. 3 shows the infrared absorption spectrum of the mixture obtained in Example 1, which contains silicon-imide and ammonium chloride;

Fig. 4 shows the infrared absorption spectrum of commercial ammonium chloride, for comparison.

Fig. 5 shows the infrared absorption spectrum of the mixture obtained in Comparative Example 2, which contains silicon-imide and ammonium chloride; and

Fig. 6 shows the DTA curve and TG curve of the mixture obtained in Example 1.

The following examples are provided to illustrate the invention.

Preparation Example 1
Synthesis of an adduct between silicon tetra-chloride and pyridine

A three-neck, 200 ml flask having a mechanical stirrer, condenser and dropping funnel was purged with nitrogen gas, then 20 ml of dried pyridine and 80 ml of di-chloromethane as solvent were introduced in the flask and maintained at room temperature. Next, by adding 10 ml of silicon tetra-chloride from the dropping funnel, about 80 ml of white slurry of an adduct was obtained. After removal of residual reactants and solvent at 55°C under a reduced pressure of 0.88 mPa (5 mmHg), 27.9 g of a powdery solid product was obtained which corresponded to a 97.6% yield based on the silicon tetra-chloride.

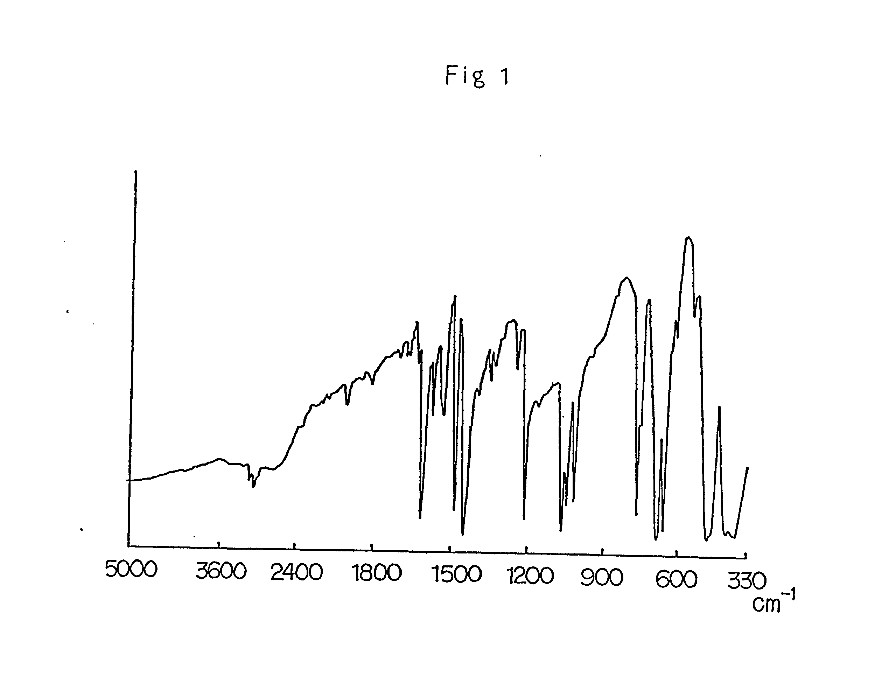

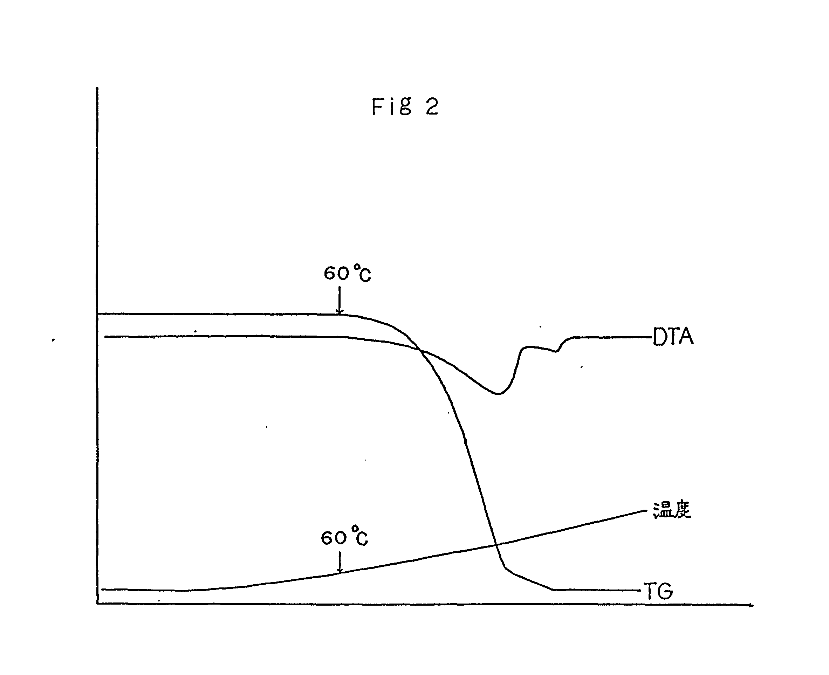

The IR spectrum of the solid product was determined and was shown in Fig. 1; it was the same as that of the adduct between silicon tetrachloride and pyridine shown in the article by H. J. Campbell-Ferguson et al, J. Chem. Soc. (A), pp 705—712, (1967). Although a peak of 1485 cm$^{-1}$ is not described in the article, we confirmed it as being the peak of the pyridinium salt. Thermal decomposition of the product started at 60°C as shown in Fig. 2, which shows the results of thermal analysis of the product.

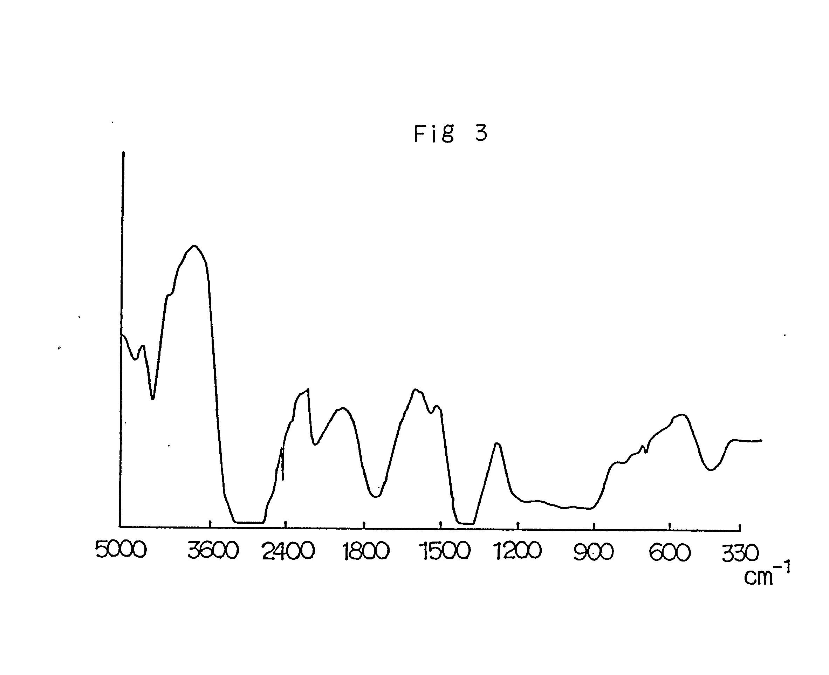

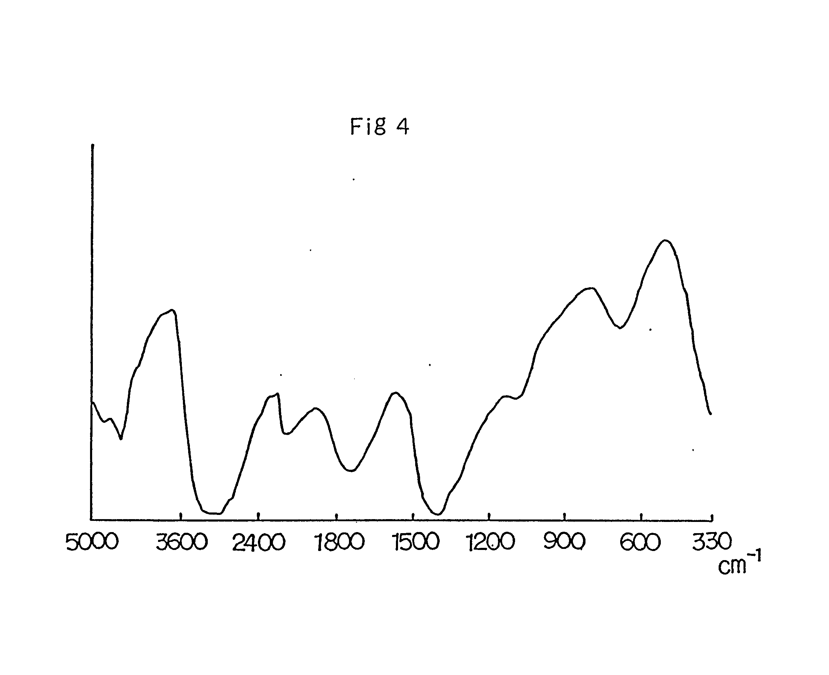

Example 1
Synthesis of silicon-imide ammonium-chloride mixture from an adduct between silicon tetrachloride and pyridine
A four-neck 200 ml flask having a gas inlet tube, mechanical stirrer, Dewar condenser and dropping funnel was purged with nitrogen gas, then 20 ml of dried pyridine and 80 ml of dichloromethane were introduced into the flask and maintained at ordinary temperature. Next, by adding 10 ml of silicon tetra-chloride from the dropping funnel, about 80 ml of a white slurry was obtained. While agitating the reaction mixture vigorously at 16°C to 18°C, 10.2 g of ammonia which was diluted with nitrogen was introduced in the flask over a period of 1.5 hours to 2 hours. When the reaction was finished, residual reactants and the solvent were removed at 53°C under a reduced pressure of 5 mm Hg (0.88 mPa), and 23.3 g of solid product was obtained which corresponded to a 98.5% yield based on the silicon tetrachloride. No fumes were observed in either reaction, and so neither the gas flow tube nor ammonia inlet were choked.
The IR spectra of the product and that of an ammonium chloride for comparison are shown in Figures 3 and 4 respectively.

Comparative Example 1
Synthesis of silicon-imide ammonium-chloride mixture by introducing ammonia gas into liquid silcion tetrachloride
A three-neck flask (300 ml) having a gas inlet tube, mechanical stirrer and Dewar condenser was purged with nitrogen gas, then 10 ml of silicon tetra-chloride and 200 ml of dried carbon tetra-chloride were introduced in the flask and maintained at 15°C. Next, while agitating the mixed solution vigorously, 10.2 g of dried ammonia diluted with nitrogen was introduced in it over 1.5 hours. Fumes formed until the reaction ceased and deposited on the wall of the gas flow passage. Consequently the ammonia inlet was often choked and was opened by increasing pressure of diluent nitrogen. The product stuck fast to the inner surface of the flask. After completion of the reaction, residual reactants and solvent were removed under a reduced pressure (50°C and 5 mm Hg (0.88 mPa)) and 10.9 g of solid product was obtained, which was a 46.1% yield based on the silicon tetra-chloride. This result shows that the reaction yield of this Comparative Example 1 is much lower than that in the method of the present invention (Example 1).

Comparative Example 2
Synthesis of silicon-imide ammonium-chloride mixture by the direct reaction of silicon tetrachloride with ammonia
A reaction vessel (100 ml) was cooled by a mixture of dry ice-methanol, then 10 ml of silicon tetra-chloride was introduced in it and maintained at a temperature lower than −34°C. Next, 10.5g of dried ammonia mixed with nitrogen was introduced over 1.5 hours. As soon as a reaction was started, solid product deposited on the liquid surface of said silicon tetra-chloride. Moreover the solid product stuck fast around the inlet for the ammonia. After introduction of all the ammonia, a part of reactants was still remained. After completion of the reaction, residual reactants and solvent were removed under a reduced pressure (50°C and 5 mm Hg (0.88 mPa)), and 11.3 g of solid product was obtained.

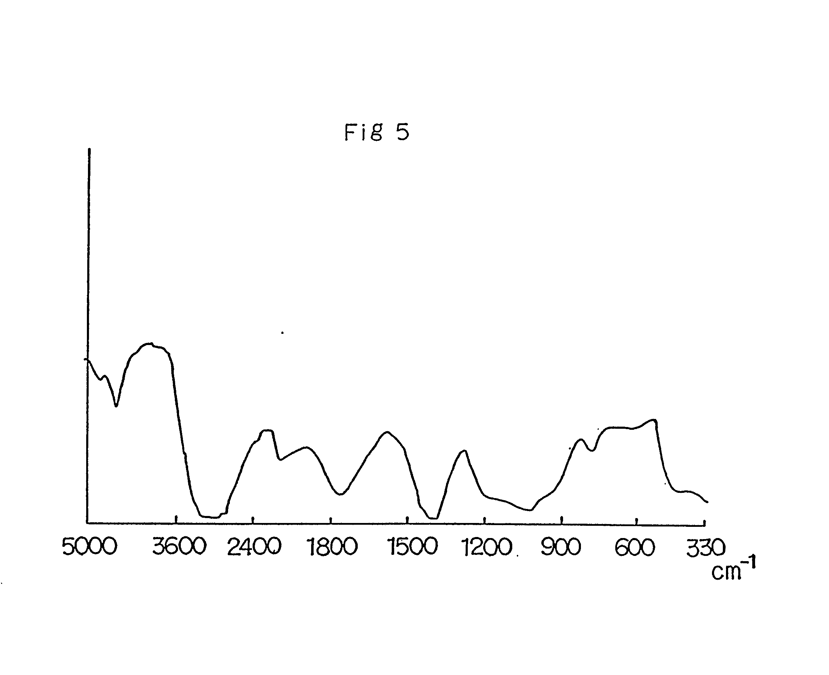

The Fig. 5 shows the IR spectrum of the product, which is in good consistency with that of the product obtained in Example 1 of this invention. However, fumes were formed since the reaction was started, and it was confirmed that the fumed product was deposited fast on the wall of the exhaust passage so that the product yield was much lower than that of the present invention.

Comparative Example 3
Synthesis of silicon-imide ammonium-chloride mixture by direct reaction of silicon tetrachloride with ammonia (at room temperature)
The same experiment was carried out except that the reaction vessel was cooled by water at 17°C. White fumes were formed as soon as the reaction started and were deposited on the wall of the exhaust passage. Moreover, the ammonia inlet was choked four times and the solid product had to be removed by a glass bar to continue the reaction. After introduction of all ammonia, residual reactants still remained. After completion of the reaction, residual reactants and the solvent were removed under a reduced pressure (50°C and 5 mm Hg (0.88 mPa)), and 5.6 g solid product was obtained, which corresponded to 23.5% yield based on the silicon tetra-chloride. This result proves that the method of the present invention is superior to the method of this Comparative Example 3.

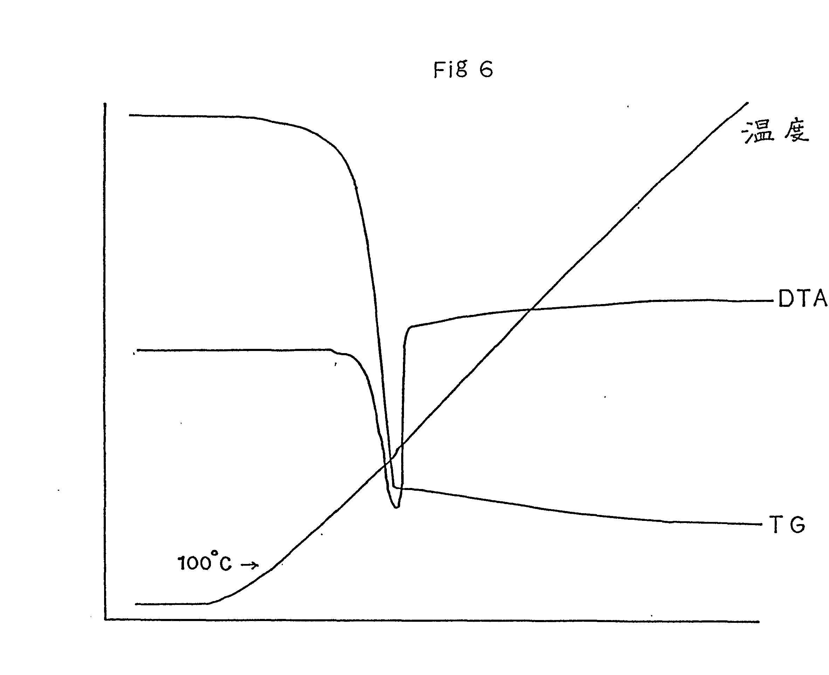

Thermal analysis of silicon-imide ammonium chloride mixture obtained in the Example 1
Thermogravimetric analysis and differential thermal analysis were carried out in the nitrogen gas flow using 9.27 mg of silicon-imide ammonium chloride mixture. The heating rate from room temperature to 1300°C was 10°C/minute. As is shown in Fig. 6, ammonium chloride sublimated at around 300°C, and 76.79% of the mass was decreased. The residue at 1000°C was 1.65 mg which corresponds to 17.8% of the initial sample. Assuming that the composition of the sample which had been used for analysis was stoichiometric $(Si(NH)_2 \cdot 4NH_4Cl)$, the values above described were calculated as 78.6% and 17.2% respectively. Both values coincide very well with each other, considering that the character of the sample was unstable in the air. This result illustrates that the method of the present invention is excellent to produce silicon-imide quantitatively.

## Claims

1. A method of producing an imide of silicon by (a) reacting a halosilane and an excess of an organic base to form a halosilane adduct and (b) reacting the adduct with ammonia, which may be diluted with nitrogen, characterized in that said halosilane is a tetrahalosilane and that the reaction (a) is carred out in a solvent.

2. A method as claimed in Claim 1, wherein said halosilane is silicon tetrachloride.

3. A method according to Claim 1 or 2, wherein the base is a Lewis base, secondary amine, tertiary amine, phosphine, arsine, stibine or a derivative of phosphine, arsine or stibine.

4. A method according to Claim 3, wherein the base is pyridine, an alykl pyridine, a trialkylamine, tertiary aromatic amine, trialkylphosphine, trialkylarsine or trialkylstibine.

5. A method according to Claim 4, wherein the base is pyridine or picoline.

6. A method according to any of Claims 1 to 5, wherein the reaction temperature (b) is from −40°C to 80°C.

7. A method of producing silicon nitride, which comprises heating a silicon amide or amide produced by the method of any preceding claim at a temperature of 1000°C to 1400°C in the presence of an atmosphere comprising nitrogen.

8. A method according to Claim 7 wherein the silicon nitride produced contains more than 70% by weight of the alpha-type crystal form and which contains more than 39% of nitrogen and less than 0.001% by weight of chlorine.

## Patentansprüche

1. Verfahren zur Herstellung eines Siliziumimids durch (a) Umsetzen eines Halogensilans mit einem Ueberschuss einer organischen Base zur Bildung eines Halogensilan-Adduktes und (b) Umsetzen des Adduktes mit Ammoniak, welcher mit Stickstoff verdünnt sein kann, dadurch gekennzeichnet, dass das Halogensilan ein Tetrahalogensilan ist, und dass die Umsetzung (a) in einem Lösungsmittel durchgeführt wird.

2. Verfahren nach Anspruch 1, dadurch gekennzeichnet, dass das Halogensilan Siliziumtetrachlorid ist.

3. Verfahren nach Anspruch 1 oder 2, dadurch gekennzeichnet, dass die Base eine Lewis-Base, ein sekundäres Amin, tertiäres Amin, Phosphin, Arsin, Stibin oder ein Derivat von Phosphin, Arsin oder Stibin ist.

4. Verfahren nach Anspruch 3, dadurch gekennzeichnet, dass die Base Pyridin, ein Alkylpyridin, ein Trialkylamin, ein tertiäres aromatisches Amin, Trialkylphosphin, Trialkylarsin oder Trialkylstibin ist.

5. Verfahren nach Anspruch 4, dadurch gekennzeichnet, dass die Base Pyridin oder Picolin ist.

6. Verfahren nach einem der Ansprüche 1 bis 5, dadurch gekennzeichnet, dass die Temperatur der Umsetzung (b) −40°C bis 80°C beträgt.

7. Verfahren zur Herstellung von Siliziumnitrid unter Erhitzen eines Siliziumamids oder des nach dem Verfahren gemäss einem der vorangehenden Ansprüche hergestellten Amids auf eine Temperatur von 1000°C bis 1400°C in Gegenwart einer Stickstoff enthaltenden Atmosphäre.

8. Verfahren nach Anspruch 7, dadurch gekennzeichnet, dass das hergestellte Siliziumnitrid mehr als 70 Gewichtsprozent Kirstallform vom Alpha-typ enthält, sowie mehr als 39% Stickstoff und weniger als 0,001 Gewichtsprozent Chlor enthält.

## Revendications

1. Procédé de fabrication d'un imide de silicium en (a) faisant réagir un halosilane et un excès d'une base organique pour former un dérivé de halosilane et en (b) faisant réagir ledit dérivé avec de l'ammoniac qui peut être dilué avec de l'azote, caractérisé en ce que ledit halosilane est un tetrahalosilane et en ce que la réaction (a) est accomplie dans un solvant.

2. Procédé selon la revendication 1, caractérisé en ce que ledit halosilane est du tetrachlorure de silicium.

3. Procédé selon la revendication 1 ou 2, caractérisé en ce que la base est une base Lewis, une amine secondaire, une amine tertiaire, de la phosphine, de l'arsine, de la stibine ou un dérivé de phosphine, d'arsine, ou de stibine.

4. Procédé selon la revendication 3, caractérisé en ce que la base est de la pyridine, une alkylpyridine, une trialkylpyridine, une amine tertiaire aromatique, de la trialkylphosphine, de la trialkylarsine ou de la trialkylstibine.

5. Procédé de la revendication 4, caractérisé en ce que la base est de la pyridine ou de la picoline.

6. Procédé selon l'une des revendications 1 à 5, caractérisé en ce que la température de réaction (b) est située entre −40°C et 80°C.

7. Procédé de fabrication de nitrure de silicium, consistant à chauffer un amide de silicium ou un amide obtenu par le procédé selon l'une des revendications précédentes à une température entre 1000°C et 1400°C en présence d'une atmosphère contenant de l'azote.

8. Procédé selon la revendication 7, caractérisé en ce que le nitrure de silicium produit contient plus de 70% par poids de forme crystalline du type alpha, ainsi que plus de 39% d'azote et moins de 0,001% par poids de chlore.

Fig 1

Fig 2

60°C

DTA

温度

60°C

TG

Fig 3

EP 0 225 412 B1

Fig 4

Fig 5

EP 0 225 412 B1

Fig 6

温度

DTA

TG

100°C →

EP 0 225 412 B1